# EUROPÄISCHE PATENTSCHRIFT

(11) **EP 4 210 996 B1**
(45) Veröffentlichungstag und Bekanntmachung des Hinweises auf die Patenterteilung: **26.03.2025**
(21) Anmeldenummer: 21773024.1
(22) Anmeldetag: 01.09.2021
(51) Int. Cl.: B60N 2/02, B60R 16/037, B60H 1/00, B60N 2/06, B60N 2/16, B60N 2/22, B60Q 3/76, B60Q 3/80, B60N 2/75

(54) **INNENRAUMVERSTELLSYSTEM FÜR EIN FAHRZEUG**
ADJUSTING SYSTEM FOR AN INTERIOR OF A VEHICLE
SYSTÈME D'AJUSTEMENT POUR INTÉRIEUR DE VÉHICULE

(30) Priorität: 08.09.2020 DE 102020211258
(43) Veröffentlichungstag der Anmeldung: 19.07.2023
(73) Patentinhaber: Brose Fahrzeugteile SE & Co. Kommanditgesellschaft, Bamberg, 96052 Bamberg (DE)
(72) Erfinder: HERRMANN, Christian, 96269 Großheirath (DE)
(74) Vertreter: Maikowski & Ninnemann Patentanwälte Partnerschaft mbB
(86) Internationale Anmeldenummer: PCT/EP2021/074135
(87) Internationale Veröffentlichungsnummer: WO 2022/053370

(56) Entgegenhaltungen:
- EP-A2- 1 818 212
- WO-A1-2019/175292
- WO-A1-2020/031575
- WO-A2-2006/051381
- DE-A1- 102014 019 125
- DE-A1- 19 522 897
- DE-T5- 112018 000 819
- DE-U1- 9 421 781
- JP-A- 2020 138 643
- US-A1- 2015 138 044
- US-A1- 2015 224 877
- US-A1- 2020 139 853
- US-A1- 2020 156 553

## Beschreibung

Die Erfindung betrifft ein Innenraumverstellsystem für ein Fahrzeug nach dem Oberbegriff des Anspruchs 1 sowie ein Verfahren zum Verstellen von Innenraumbaugruppen in einem Innenraum eines Fahrzeugs.

Ein derartiges Innenraumverstellsystem umfasst eine erste Innenraumbaugruppe, die eine erste Verstelleinrichtung zum Verstellen der ersten Innenraumbaugruppe aufweist, und zumindest eine zweite Innenraumbaugruppe, die eine zweite Verstelleinrichtung zum Verstellen der zumindest einen zweiten Innenraumbaugruppe aufweist. Eine Steuereinrichtung dient zum Steuern von Verstellvorgängen der ersten Innenraumbaugruppe und/oder der zweiten Innenraumbaugruppe.

Bei der ersten Innenraumbaugruppe kann es sich beispielsweise um einen Fahrzeugsitz handeln, der im Innenraum eines Fahrzeugs zu verstellen ist. Ein solcher Fahrzeugsitz kann beispielsweise in seiner Längsposition, in seiner Drehstellung, in der Neigung einer Rückenlehne und/oder in der Sitzhöhe zu verstellen sein, wobei eine Verstellung generell zur Einstellung einer Komfortposition für einen Fahrzeuginsassen, gegebenenfalls aber auch zum Einstellen einer vorbestimmten Funktionsstellung, zum Beispiel einer flachen Stellung zur Vergrößerung eines Laderaums, möglich sein kann.

Bei zukünftigen Innenraumkonzepten, insbesondere im Zusammenhang mit autonom fahrenden Fahrzeugen, kann eine Verstellbarkeit von Innenraumbaugruppen in größerem Umfang, insbesondere auch über größere Verstellwege möglich sein. Beispielsweise kann ein Fahrzeugsitz zukünftig gegebenenfalls über eine vergleichsweise große Strecke zwischen einer vorderen und einer hinteren Position im Fahrzeuginnenraum bewegt werden, wobei zusätzlich gegebenenfalls auch die Drehstellung des Fahrzeugsitzes anpassbar sein kann.

Bei solchen Innenraumkonzepten besteht generell der Wunsch, eine Einstellbarkeit von Innenraumbaugruppen für einen Nutzer einfach, komfortabel und intuitiv zu machen.

Aus der US 2017/0166089 A1 ist ein Fahrzeugsitz im Innenraum eines Fahrzeugs bekannt, der elektrisch verstellbar ist. Die Verstellung des Fahrzeugsitzes kann unter Verwendung einer Gestensteuerung durch einen Nutzer initiiert werden, beispielsweise indem ein Nutzer eine vorbestimmte Geste im Bereich des Fahrzeugsitzes ausführt und dadurch zum Beispiel ein Verschwenken einer Rückenlehne oder ein Längsverstellen des Fahrzeugsitzes im Fahrzeuginnenraum bewirken kann.

Aus der DE 11 2015 000 921 T5 ist ein Innenraumverstellsystem bekannt, bei dem Fahrzeugsitze beispielsweise in einem Frachtlademodus zur Vergrößerung einer Ladefläche eines Fahrzeugs verstellt werden können. Im Frachtlademodus kann hierbei durch ein Objekt beispielsweise Druck auf eine Rückenlehne eines Fahrzeugsitzes ausgeübt werden, woraufhin die Rückenlehne verstellt wird. Wird noch mehr Platz benötigt, können auch weitere Sitze verstellt werden.

Die US 2020/156553 A1 offenbart, dass in einem Fahrzeuginnenraum ein Konsolenelement 30 automatisch bei einer Verstellbewegung eines Fahrzeugsitzes nachgestellt wird, sodass ein Fahrzeuginsasse auf dem Fahrzeugsitz weiterhin bequem das Konsolenelement nutzen kann.

In der US 2015/138044 A1 ist offenbart, dass ein Bildschirm in Abhängigkeit einer Sitzposition automatisch nachgestellt wird.

Die WO 2020/031575 A1 offenbart eine Steuereinrichtung für eine Klimaanlage, bei der ein Lüfterausgang und eine Umlenkplatte in Abhängigkeit von der Stellung einer Rückenlehne eines Fahrzeugsitzes verstellt werden.

Aus der JP 2020-138643 A ist eine Verstelleinrichtung für eine Leselampe in einem Fahrzeug bekannt, bei der die Abstrahlrichtung der Leselampe in Abhängigkeit von einer Fahrzeugsitzposition nachgestellt wird.

Die US 2020/139853 A offenbart eine Anordnung von Fahrzeugsitzen und Funktionsbaugruppen im Inneren eines Fahrzeugs, bei der eine Steuereinrichtung Sensorsignale erhält, die die Relativpositionen der einzelnen Baugruppen anzeigen. Die Steuereinrichtung kann einzelne Verstelleinrichtungen, die den Baugruppen zugeordnet sind, ansteuern, um bei Gefahr einer Kollision zwischen Baugruppen deren Verstellbewegung anzupassen.

Aufgabe der vorliegenden Erfindung ist es, ein Innenraumverstellsystem für ein Fahrzeug sowie ein Verfahren zum Verstellen von Innenraumbaugruppen in einem Innenraum eines Fahrzeugs zur Verfügung zu stellen, die ein Verstellen von Innenraumbaugruppen einfach, komfortabel und intuitiv für einen Nutzer machen.

Diese Aufgabe wird durch einen Gegenstand mit den Merkmalen des Anspruchs 1 gelöst.

Demnach ist die Steuereinrichtung dazu ausgebildet, die zweite Verstelleinrichtung zum Verstellen der zumindest einen zweiten Innenraumbaugruppe in Abhängigkeit einer Verstellbewegung der ersten Innenraumbaugruppe anzusteuern.

Bei dem Innenraumverstellsystem sind unterschiedliche Innenraumbaugruppen vorgesehen, die über unterschiedliche Verstelleinrichtungen verstellbar sind. Die Innenraumbaugruppen können räumlich voneinander getrennt und baulich unabhängig voneinander sein, wobei eine Verstellbewegung der Innenraumbaugruppen jedoch in gesteuerter Weise so erfolgt, dass eine Verstellbewegung an einer Innenraumbaugruppe gegebenenfalls eine Nachstellbewegung an einer anderen Innenraumbaugruppe bewirkt. Dies ermöglicht, zum Beispiel bei einem nutzerinitiierten Verstellen einer Innenraumbaugruppe eine andere Innenraumbaugruppe so nachzustellen, dass eine durch diese andere Innenraumbaugruppe zur Verfügung gestellte Funktion weiterhin bereitgestellt werden kann.

Bei der ersten Innenraumbaugruppe kann es sich beispielsweise um einen Fahrzeugsitz oder eine Baugruppe eines Fahrzeugsitzes handeln. Die erste Verstelleinrichtung kann hierbei beispielsweise eine Sitzlängsverstelleinrichtung, eine Sitzhöhenverstelleinrichtung, eine Rückenlehneneigungsverstelleinrichtung, eine Kopfstützenverstelleinrichtung, eine Sitztiefenverstelleinrichtung oder eine andere Verstelleinrichtung zum Verstellen des Fahrzeugsitzes insgesamt oder einer Baugruppe des Fahrzeugsitzes bereitstellen. Die erste Verstelleinrichtung kann elektromotorisch ausgestaltet sein und somit ein elektromotorisches Verstellen der zugeordneten Baugruppe ermöglichen. Die erste Verstelleinrichtung kann aber auch manuell zu bedienen sein, beispielsweise um den Fahrzeugsitz oder eine Baugruppe des Fahrzeugsitzes manuell zu bewegen, zum Beispiel zum Verstellen der Längsposition des Fahrzeugsitzes oder zum Einstellen einer Lehnenneigung.

Bei der zweiten Innenraumbaugruppe kann es sich demgegenüber um eine von der ersten Innenraumbaugruppe getrennte, weitere Innenraumbaugruppe handeln, zum Beispiel in Form eines Konsolenelements, einer Armauflage, einer Halteeinrichtung zum Halten einer Funktionsbaugruppe, einer Lüftungseinrichtung, einer Klangerzeugungseinrichtung, einer Lichterzeugungseinrichtung, eines Displays, eines Bedienelements oder eine Ablageeinrichtung. Über die zweite Innenraumbaugruppe kann beispielsweise eine Funktion im Bereich der ersten, beispielsweise als Fahrzeugsitz ausgestalteten Innenraumbaugruppe bereitgestellt werden, beispielsweise als Ablage oder als Halteeinrichtung. Dadurch, dass die Steuereinrichtung zum Ansteuern der zweiten Verstelleinrichtung zum Verstellen der zweiten Innenraumbaugruppe in Abhängigkeit von einer Verstellbewegung der ersten Innenraumbaugruppe ausgebildet ist, kann die zweite Innenraumbaugruppe bei einer Verstellbewegung an der ersten Innenraumbaugruppe nachgestellt werden, sodass die zweite Innenraumbaugruppe in Abhängigkeit von der neu eingestellten Position der ersten Innenraumbaugruppe in eine solche Position gebracht werden kann, dass eine durch die zweite Innenraumbaugruppe bereitgestellte Funktion weiterhin zur Verfügung gestellt werden kann, beispielsweise um einem Nutzer auf einem Fahrzeugsitz ein komfortables Zugreifen auf die zweite Innenraumbaugruppe, zum Beispiel in Form eines Konsolenelements oder in Form einer Ablageeinrichtung wie eines Tisches oder dergleichen, zu ermöglichen.

Ein Konsolenelement kann beispielsweise neben einem Fahrzeugsitz angeordnet und relativ zu dem Fahrzeugsitz verstellbar sein. Ein solches Konsolenelement kann beispielsweise eine Ablage bereitstellen, wobei auch weitere Funktionsbaugruppen, zum Beispiel eine Halteeinrichtung in Form einer Handyhalterung oder eine Bedienbaugruppe oder dergleichen, an dem Konsolenelement angeordnet sein können.

Eine Armauflage kann beispielsweise an einem Konsolenelement angeordnet sein, kann aber auch separat von einem Konsolenelement ausgebildet und verstellbar sein.

Eine Halteeinrichtung zum Halten einer Funktionsbaugruppe, zum Beispiel eines Mobiltelefons, kann an einem Konsolenelement angebracht und an dem Konsolenelement verstellbar sein, kann aber auch an einem anderen Ort in einem Fahrzeug befestigt sein. Die Halteeinrichtung kann eine mechanische Haltefunktion und zudem beispielsweise eine elektrische Funktion, zum Beispiel zum Aufladen eines Mobiltelefons, bereitstellen.

Generell können Ablageeinrichtungen wie Ablagefächer, Tische oder dergleichen durch eine zugeordnete Verstelleinrichtung in Abhängigkeit von einer Verstellbewegung der ersten Innenraumbaugruppe, zum Beispiel in Form eines Fahrzeugsitzes, nachgestellt und angepasst werden.

Eine Lüftungseinrichtung kann beispielsweise durch eine Düse oder einen Lüfter ausgebildet sein. Durch Nachstellen der Lüftungseinrichtung kann ein Luftstrom in Abhängigkeit von einer angepassten Stellung der ersten Innenraumbaugruppe, zum Beispiel in Form eines Fahrzeugsitzes, so zum Beispiel in seiner Richtung verändert werden, dass der Luftstrom in Abhängigkeit von zum Beispiel einer veränderten Sitzposition eines Nutzers weiterhin auf die erste Innenraumbaugruppe, zum Beispiel den Fahrzeugsitz, gerichtet ist.

Durch Nachstellen einer Lüftungseinrichtung kann insbesondere eine Klimazone in einem Fahrzeuginnenraum nachgestellt werden, sodass gegebenenfalls individuell klimatisierte Bereiche in einem Fahrzeuginnenraum in Abhängigkeit von der Position der ersten Innenraumbaugruppe, zum Beispiel in Form eines Fahrzeugsitzes, eingestellt und angepasst werden können.

Eine Klangerzeugungseinrichtung kann zum Beispiel durch einen oder mehrere Lautsprecher eines Klangsystems des Fahrzeugs verwirklicht sein. Durch Nachstellen der Klangerzeugungseinrichtung kann ein Klangfeld so auf die erste Innenraumbaugruppe, zum Beispiel in Form eines Fahrzeugsitzes, ausgerichtet werden, dass im Bereich der ersten Innenraumbaugruppe eine gewünschte Akustik bereitgestellt und nachgestellt wird.

Bei einer Lichterzeugungseinrichtung kann es sich beispielsweise um eine Beleuchtung innerhalb eines Fahrzeugs, zum Beispiel eine Leselampe oder dergleichen, oder auch um eine Projektionseinrichtung zur Signalisierung zum Beispiel von Verkehrsinformationen oder eine Einrichtung zur Erzeugung von Lichteffekten handeln. Durch das Nachstellen der Lichterzeugungseinrichtung in Abhängigkeit von einer Verstellbewegung der ersten Innenraumbaugruppe, zum Beispiel in Form eines Fahrzeugsitzes, kann zum Beispiel ein Beleuchtungsfeld in Abhängigkeit von der Sitzposition eines Fahrzeuginsassen angepasst werden, oder eine Projektion einer Information kann so nachgestellt werden, dass die Projektion weiterhin im Sichtfeld des Nutzers ist.

Bei der zweiten Innenraumbaugruppe kann es sich zum Beispiel auch um ein Display handeln, zum Beispiel in Form eines Bildschirms eines Navigationsgeräts oder eines Unterhaltungssystems des Fahrzeugs, das in Abhängigkeit von einer Verstellbewegung der ersten Innenraumbaugruppe, zum Beispiel in Form eines Fahrzeugsitzes, nachgestellt wird, sodass das Display zum Beispiel weiterhin komfortabel durch einen Nutzer eingesehen werden kann.

Ein Bedienelement kann beispielsweise zum Bedienen einer Funktionsbaugruppe dienen, zum Beispiel eines Unterhaltungssystems, eines Bordcomputers, eines Navigationsgeräts, eines Fensterhebers, eines Fahrzeugsitzes, einer Verstellbaugruppe wie einer Fahrzeugtür oder eines Außenspiegels. Das Bedienelement kann eine zweite Innenraumbaugruppe verwirklichen, die durch eine zugeordnete, zweite Verstelleinrichtung in ihrer Position veränderbar ist, sodass die Innenraumbaugruppe in Abhängigkeit von einer Verstellbewegung der ersten Innenraumbaugruppe, zum Beispiel in Form eines Fahrzeugsitzes, nachgestellt und in ihrer Position angepasst werden kann, sodass ein Fahrzeuginsasse beispielsweise weiterhin komfortabel auf das Bedienelement zugreifen kann.

Auch weitere Innenraumbaugruppen können in Abhängigkeit von einer Verstellbewegung einer ersten Innenraumbaugruppe, zum Beispiel in Form eines Fahrzeugsitzes, verstellbar und nachstellbar sein. Bei solchen Innenraumbaugruppen kann es sich beispielsweise auch um eine Gurthöheneinstellung, einen Gurtbringer, ein Lenkrad oder zum Beispiel ein Heizbaugruppe, zum Beispiel in Form eines Infrarotstrahlers, handeln, die zusätzlich oder alternativ zu den vorangehend genannten Innenraumbaugruppen in Abhängigkeit von der Verstellbewegung der ersten Innenraumbaugruppe, zum Beispiel in Form eines Fahrzeugsitzes, verstellbar sein können.

Die vorangehend genannten, unterschiedlichen, zweiten Innenraumbaugruppen können jeweils gesondert oder in Kombination in Abhängigkeit von der Verstellbewegung der ersten Innenraumbaugruppe, zum Beispiel in Form eines Fahrzeugsitzes, verstellbar sein. Denkbar ist somit, dass eine einzelne der genannten Innenraumbaugruppen in Abhängigkeit von der Verstellbewegung der ersten Innenraumbaugruppe verstellbar ist. Denkbar ist aber auch, dass mehrere oder sämtliche der genannten zweiten Innenraumbaugruppen in Abhängigkeit von der Verstellbewegung der ersten Innenraumbaugruppe eingestellt werden, sodass bei einem Verstellen der ersten Innenraumbaugruppe ein gemeinsames Nachstellen einer Vielzahl von zweiten Innenraumbaugruppen in Abhängigkeit von einer neu eingestellten Position der ersten Innenraumbaugruppe erfolgt.

In einer Ausgestaltung weist die erste Verstelleinrichtung einen Elektromotor zum elektromotorischen Verstellen der ersten Innenraumbaugruppe auf. Das Verstellen der ersten Innenraumbaugruppe kann somit elektromotorisch erfolgen, beispielsweise indem ein Nutzer die erste Verstelleinrichtung über ein Bedienelement, zum Beispiel in Form eines Tasters oder Schalters, betätigt und somit die erste Innenraumbaugruppe aus einer gerade eingenommenen Stellung in eine neue, verstellte Position bringt.

Ein Verstellen der ersten Innenraumbaugruppe kann aber auch zum Beispiel manuell durch Verschieben, Verdrehen oder Verschwenken der ersten Innenraumbaugruppe durch einen Nutzer möglich sein.

Das Initiieren des Verstellens der ersten Innenraumbaugruppe kann durch Betätigung eines Bedienelements, zum Beispiel in Form eines Tasters oder Schalters erfolgen. Denkbar ist zum Beispiel aber auch eine Gestensteuerung durch Erkennung einer Nutzergeste mittels einer Gestenerkennungseinrichtung, zum Beispiel in Form eines Innenraumüberwachungssystems. Über solch eine Nutzergeste, beispielsweise in Form einer Handbewegung (wie dies beispielsweise in der US 2017/166089A beschrieben ist), kann beispielsweise ein Verstellvorgang eines Fahrzeugsitzes, zum Beispiel zum Vorschieben des Fahrzeugsitzes oder zum Verschwenken einer Rückenlehne initiiert werden, wobei die Nutzergeste durch die Steuereinrichtung ausgewertet wird und die Steuereinrichtung die der ersten Innenraumbaugruppe zugeordnete, erste Verstelleinrichtung zum Verstellen der ersten Innenraumbaugruppe aktiviert.

In einer Ausgestaltung weist die zweite Verstelleinrichtung einen Elektromotor zum elektromotorischen Verstellen der zweiten Innenraumbaugruppe auf. Das Verstellen der zweiten Innenraumbaugruppe erfolgt elektromotorisch in gesteuerter Weise in Abhängigkeit von der Verstellbewegung der ersten Innenraumbaugruppe. Wird eine Verstellbewegung der ersten Innenraumbaugruppe erkannt, wird die zweite Innenraumbaugruppe, gesteuert durch die Steuereinrichtung, unter Verwendung der zweiten Verstelleinrichtung nachgestellt, sodass die zweite Innenraumbaugruppe in eine Position gebracht wird, die von der nunmehr eingenommenen, neu eingestellten Stellung der ersten Innenraumbaugruppe abhängt.

Die erste Innenraumbaugruppe ist durch Betätigung der ersten Verstelleinrichtung (elektromotorisch oder manuell) aus einer aktuellen, ersten Stellung in eine verstellte, zweite Stellung bewegbar. Die Steuereinrichtung ist hierbei dazu ausgebildet, die zweite Verstelleinrichtung zum Verstellen der zumindest einen zweiten Innenraumbaugruppe aus einer aktuellen, ersten Funktionsstellung in eine von der zweiten Stellung der ersten Innenraumbaugruppe abhängige, verstellte, zweite Funktionsstellung anzusteuern. Wird die erste Innenraumbaugruppe aus einer aktuellen, ersten Stellung in eine verstellte, zweite Stellung bewegt, so wird die zweite Innenraumbaugruppe entsprechend nachgestellt, wobei die neue Stellung der zweiten Innenraumbaugruppe von der verstellten Stellung der ersten Innenraumbaugruppe abhängt und die zweite Innenraumbaugruppe somit in eine solche Relativposition zur verstellten, ersten Innenraumbaugruppe gebracht wird, dass beispielsweise eine durch die zweite Innenraumbaugruppe bereitgestellte Funktion weiterhin zur Verfügung gestellt werden kann. Beispielsweise kann auf diese Weise eine zweite Innenraumbaugruppe in Form eines Konsolenelements der ersten Innenraumbaugruppe zum Beispiel in Form eines Fahrzeugsitzes nachgestellt werden, sodass ein Nutzer auf dem Fahrzeugsitz weiterhin auf das Konsolenelement oder eine daran angeordnete Baugruppe wie eine Handyhalterung, eine Armauflage oder ein Bedienelement zugreifen kann.

Das Nachstellen der zweiten Innenraumbaugruppe kann synchron zum Verstellen der ersten Innenraumbaugruppe erfolgen, sodass bei Verstellen der ersten Innenraumbaugruppe bereits auch die zweite Innenraumbaugruppe in gesteuerter Weise mitbewegt wird.

Alternativ kann ein Verstellen der zweiten Innenraumbaugruppe zeitversetzt erfolgen, beispielsweise erst dann, wenn die Verstellbewegung der ersten Innenraumbaugruppe bereits abgeschlossen ist. Wiederum wird die zweite Innenraumbaugruppe jedoch in eine solche Positionsstellung gebracht, die von der neu eingestellten Stellung der ersten Innenraumbaugruppe abhängt, sodass die zweite Innenraumbaugruppe in gesteuerter Weise der ersten Innenraumbaugruppe nachgeführt wird.

Das Nachstellen der zweiten Innenraumbaugruppe kann beispielsweise automatisiert ohne Nutzerzutun erfolgen. Denkbar ist aber auch, dass vor Nachstellen der zweiten Innenraumbaugruppe eine Nutzereingabe an einem zugeordneten Bedienelement zur Bestätigung des Verstellvorgangs abgewartet wird und ein Nachstellen erst nach der Nutzerbestätigung erfolgt.

Die Steuereinrichtung ist dazu ausgebildet, ein Verstellkriterium zu prüfen und die zweite Verstelleinrichtung zum Verstellen der zumindest einen zweiten Innenraumbaugruppe aus der aktuellen, ersten Funktionsstellung in die verstellte, zweite Funktionsstellung in Abhängigkeit von der Prüfung des Verstelltkriteriums anzusteuern. Das Verstellen der zweiten Innenraumbaugruppe erfolgt somit nicht stets oder nicht stets in gleicher Form, sondern in Abhängigkeit von einem zusätzlichen Verstellkriterium, das als zusätzliche Bedingung für die Verstellung der zweiten Innenraumbaugruppe geprüft wird. In Abhängigkeit von der Prüfung des Verstellkriteriums kann hierbei eine Verstellung der zweiten Innenraumbaugruppe ganz unterbunden werden oder angepasst werden, sodass die Verstellbewegung der zweiten Innenraumbaugruppe in Abhängigkeit von dem Verstellkriterium in unterschiedlicher Weise ausgeführt werden kann.

Die Steuereinrichtung ist dazu ausgebildet, einen Belegungszustand eines oder mehrerer Fahrzeugsitze auszuwerten. Beispielsweise kann die Steuereinrichtung zudem dazu ausgebildet sein, als Verstellkriterium ein Bedienereignis, einen Benutzungszustand der zumindest einen zweiten Innenraumbaugruppe, einen Kollisionszustand der zumindest einen zweiten Innenraumbaugruppe oder einen Fahrzustand des Fahrzeugs auszuwerten.

Bei einem Bedienereignis kann es sich beispielsweise um eine durch einen Nutzer getätigte Einstellung über eine Eingabeeinrichtung wie einen Taster oder dergleichen handeln. Über solch eine Eingabeeinrichtung kann ein Nutzer beispielsweise ein Nachstellen der zweiten Innenraumbaugruppe ausdrücklich auswählen oder ausdrücklich abwählen, wobei sich die Einstellung des Nutzers auf sämtliche zweiten Innenraumbaugruppen oder auf ausgewählte zweite Innenraumbaugruppen beziehen kann. Ein Verstellen der zweiten Innenraumbaugruppe erfolgt somit in Abhängigkeit von einer durch einen Nutzer getätigten Eingabe.

Der Nutzer kann hierbei bei einer Verstellbewegung der ersten Innenraumbaugruppe individuell aufgefordert werden, ein Nachstellen der zweiten Innenraumbaugruppe zu bestätigen. Alternativ kann eine Voreinstellung definiert sein, beispielsweise indem ein Schalter im Fahrzeug auf EIN oder AUS gestellt wird, wobei das Nachstellen der zweiten Innenraumbaugruppe in Abhängigkeit von der Voreinstellung erfolgt.

Bei einem Benutzungszustand der zumindest einen zweiten Innenraumbaugruppe kann es sich beispielsweise um einen Benutzungszustand eines Displays, eines Getränkehalters oder einer Lüftung handeln. Ist die zweite Innenraumbaugruppe zum Beispiel durch ein Display verwirklicht, so erfolgt eine Nachstellung beispielsweise lediglich dann, wenn sich das Display in Benutzung befindet (also angeschaltet ist). Ist die zweite Innenraumbaugruppe durch einen Getränkehalter verwirklicht, so erfolgt ein Verstellen des Getränkehalters beispielsweise lediglich dann, wenn der Getränkehalter belegt ist, also ein Gegenstand an dem Getränkehalter angeordnet ist. Ist die zweite Innenraumbaugruppe durch eine Lüftungseinrichtung verwirklicht, so erfolgt ein Nachstellen der Lüftung beispielsweise nur dann, wenn die Lüftungseinrichtung in Benutzung ist.

Bei einem Kollisionszustand kann es sich beispielsweise um eine durch eine Kollisionsüberwachungseinrichtung, zum Beispiel eine Innenraumüberwachungseinrichtung, erkannte Kollisionsgefahr der zweiten Innenraumbaugruppe handeln. Wird anhand einer Erkennung der Kollisionserkennungseinrichtung festgestellt, dass bei einer Bewegung der zweiten Innenraumbaugruppe eine Kollisionsgefahr mit hinreichender Wahrscheinlichkeit besteht, so kann ein Verstellen der zweiten Innenraumbaugruppe beispielsweise unterbunden oder modifiziert werden.

Zur Prüfung des Fahrzustands des Fahrzeugs kann geprüft werden, ob sich das Fahrzeug in Bewegung oder im Stillstand befindet. Bei Stillstand des Fahrzeugs kann beispielsweise ein Nachstellen der zweiten Innenraumbaugruppe in geringerem Umfang vorgenommen werden, um einen Energieverbrauch zu reduzieren. Gegebenenfalls wird ein Nachstellen bei Stillstand des Fahrzeugs erst mit einer Verzögerung oder auch in Abhängigkeit von einer Bordnetzspannung durchgeführt. Zudem kann eine Geschwindigkeit des Fahrzeugs ausgewertet werden, sodass beispielsweise bei einer Geschwindigkeit oberhalb einer vorbestimmten Schwelle ein Nachstellen ganz unterbunden wird.

Zur Prüfung eines Belegungszustands eines oder mehrerer Fahrzeugsitze wird geprüft, ob sich ein Fahrzeuginsasse auf einem bestimmten Sitz befindet, beispielsweise auf dem Fahrersitz, und ob gleichzeitig auch noch weitere Sitze belegt sind. Beispielsweise erfolgt, wenn nur der Fahrersitz belegt ist, eine vollständige Nachstellung der auf den Fahrersitz bezogenen Innenraumbaugruppen, beispielsweise einer Lüftungseinrichtung. Ist der Fahrersitz und zudem auch der Beifahrersitz belegt, erfolgt eine Nachstellung zum Beispiel nur für einzelne Baugruppen, beispielsweise indem bei einer Lüftungseinrichtung nur einzelne Lüfterelemente nachgestellt werden, andere aber nicht. Zudem kann zum Beispiel eine Verstellung einer Mittelkonsole davon abhängig gemacht werden, ob lediglich der Fahrersitz oder der Fahrersitz und der Beifahrersitz belegt sind. Beispielsweise kann vorgesehen sein, die Mittelkonsole nur dann nachzustellen, wenn der Fahrersitz belegt ist, nicht aber der Beifahrersitz. Zudem kann die Verstellung der zweiten Innenraumbaugruppe gegebenenfalls davon abhängig gemacht werden, ob durch das Verstellen der zweiten Innenraumbaugruppe gegebenenfalls ein Nutzerkomfort eines anderen Insassen beeinträchtigt wird. So kann ein Verstellen einer Mittelkonsole beispielsweise dann unterbunden oder nur eingeschränkt durchgeführt werden, wenn durch das Verstellen die Mittelkonsole einer hinteren Sitzreihe angenähert werden würde, diese hintere Sitzreihe aber durch einen oder mehrere Fahrzeuginsassen belegt ist und somit der Komfort der Fahrzeuginsassen beeinträchtigt werden könnte.

Solche Verstellkriterien können einzeln oder in Kombination ausgewertet werden.

Gegebenenfalls können auch weitere Kriterien ausgewertet werden. Ergibt sich beispielsweise, dass ein Nachstellen der zumindest einen zweiten Innenraumbaugruppe nicht sinnvoll ist, weil in der verstellten Position der ersten Innenraumbaugruppe eine Nutzung der zweiten Innenraumbaugruppe sinnvoll nicht möglich ist, so kann ein Nachstellen der zweiten Innenraumbaugruppe gegebenenfalls unterbunden werden. Wird beispielsweise ein eine erste Innenraumbaugruppe verwirklichender Fahrzeugsitz so verstellt, dass ein eine zweite Innenraumbaugruppe verwirklichendes Display in der verstellten Position des Fahrzeugsitzes nicht mehr sinnvoll genutzt werden kann, so kann ein Nachstellen des Displays unterbunden werden. Dies kann durch Konfiguration vorab vorgegeben werden.

In einer Ausgestaltung ist die Steuereinrichtung dazu ausgebildet, die zweite Funktionsstellung in Abhängigkeit von dem Verstellkriterium zu bestimmen. So kann die zweite Funktionsstellung, in die die zweite Innenraumbaugruppe nachgestellt wird, in Abhängigkeit von der Prüfung des Verstellkriteriums unterschiedlich festgelegt werden. Beispielsweise kann eine durch eine Mittelkonsole, eine Lüftung oder ein Display verwirklichte zweite Innenraumbaugruppe in Abhängigkeit von einem Belegungszustand eines oder mehrerer Fahrzeugsitze in unterschiedlicher Weise verstellt werden.

Die erste Innenraumbaugruppe ist beispielsweise entlang einer ersten Bewegungsbahn in einem Fahrzeuginnenraum verstellbar. Die erste Innenraumbaugruppe kann somit beispielsweise entlang einer definierten, vorgegebenen Bewegungsbahn im Fahrzeuginnenraum bewegt werden, beispielsweise um einen Fahrzeugsitz entlang eines Fahrzeugbodens zu verstellen und so zum Beispiel eine Längsposition des Fahrzeugsitzes anzupassen. Die erste Innenraumbaugruppe kann hierbei grundsätzlich in beliebige, unterschiedliche, individuell einstellbare Stellungen entlang der ersten Bewegungsbahn gebracht werden, sodass die erste Innenraumbaugruppe variabel im Fahrzeuginnenraum verstellt werden kann. Die Steuerung der Verstellbewegung der zweiten Innenraumbaugruppe erfolgt hierbei in Abhängigkeit der neu eingestellten Stellung der ersten Innenraumbaugruppe, die hierzu beispielsweise sensorisch über eine Positionserkennung in der ersten Verstelleinrichtung oder eine andere Sensoreinrichtung, zum Beispiel in Form eines Innenraumüberwachungssystems, erfasst wird.

Eine solche Bewegungsbahn kann beispielsweise über Führungsschienen oder dergleichen vorgegeben werden.

Zusätzlich kann auch die zumindest eine zweite Innenraumbaugruppe entlang einer zweiten Bewegungsbahn in dem Fahrzeuginnenraum verstellbar sein, sodass auch die zweite Innenraumbaugruppe entlang einer definierten Bewegungsbahn im Fahrzeuginnenraum bewegbar ist. Die zweite Innenraumbaugruppe kann hierbei grundsätzlich beliebige Stellungen entlang der zweiten Bewegungsbahn einnehmen, wobei das Verstellen der zweiten Innenraumbaugruppe in Abhängigkeit von einer Verstellbewegung der ersten Innenraumbaugruppe erfolgt und die Stellung der zweiten Innenraumbaugruppe in Abhängigkeit von der neuen Verstellposition der ersten Innenraumbaugruppe eingestellt wird.

In einer Ausgestaltung weist das Innenraumverstellsystem eine Sensoreinrichtung zum Erfassen einer Stellung der ersten Innenraumbaugruppe und/oder der zumindest einen zweiten Innenraumbaugruppe auf. Eine solche Sensoreinrichtung kann beispielsweise durch ein Innenraumüberwachungssystem, zum Beispiel in Form eines Radarsystems, eines Lidarsystems oder eines Ultraschallsystems, ausgestaltet sein und ein Erkennen von Objekten im Fahrzeuginnenraum ermöglichen. Eine solche Sensoreinrichtung kann beispielsweise aber auch durch eine Positionserkennung an den einzelnen Verstelleinrichtungen verwirklicht sein, beispielsweise über Lagesensoren an den Innenraumbaugruppen oder durch eine absolute oder relative Positionserkennung an einer Verstelleinrichtung, zum Beispiel unter Verwendung von Hall-Sensoren. Die Steuerung der zweiten Innenraumbaugruppe erfolgt entsprechend anhand der bekannten, neu eingestellten Stellung der ersten Innenraumbaugruppe, sodass die zweite Innenraumbaugruppe bei einer Verstellbewegung an der ersten Innenraumbaugruppe in einer solchen Weise nachgestellt wird, dass eine durch die zweite Innenraumbaugruppe bereitgestellte Funktion weiterhin komfortabel für einen Fahrzeuginsassen zur Verfügung gestellt werden kann.

Bei der Steuereinrichtung kann es sich beispielsweise um eine zentrale elektronische Steuerung eines Fahrzeugs handeln, die zum zentralen Auswerten und Verarbeiten von Signalen dient und zentrale Steuerungsfunktionen im Fahrzeug übernimmt.

Denkbar ist aber auch, dass die Steuereinrichtung durch mehrere einzelne, dezentral angeordnete Steuereinrichtungen - zum Beispiel Steuereinrichtungen, die den einzelnen Verstelleinrichtungen zugeordnet sind - verwirklicht ist.

Nach einem weiteren Aspekt weist ein Verfahren zum Verstellen von Innenraumbaugruppen in einem Innenraum eines Fahrzeugs folgende Schritte auf: Verstellen einer ersten Innenraumbaugruppe unter Verwendung einer ersten Verstelleinrichtung; Verstellen zumindest einer zweiten Innenraumbaugruppe unter Verwendung einer zweiten Verstelleinrichtung; dabei Steuern der zweiten Verstelleinrichtung zum Verstellen der zumindest einen zweiten Innenraumbaugruppe in Abhängigkeit einer Verstellbewegung der ersten Innenraumbaugruppe.

Die vorangehend für das Innenraumverstellsystem beschriebenen Vorteile und vorteilhaften Ausgestaltungen finden analog auch auf das Verfahren Anwendung, sodass vollumfänglich auf die vorangehenden Ausführungen verwiesen werden soll.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht eines Fahrzeuginnenraums mit darin angeordneten Innenraumbaugruppen;
- Fig. 2: eine andere schematische Ansicht eines Fahrzeuginnenraums;
- Fig. 3: eine schematische Ansicht einer ersten Innenraumbaugruppe zusammen mit zugeordneten zweiten Innenraumbaugruppen und einer Steuereinrichtung;
- Fig. 4: eine schematische Ansicht einer Verstellbewegung einer ersten Innenraumbaugruppe, zum Beispiel in Form eines Fahrzeugsitzes, und einer Nachstellbewegung einer zugeordneten zweiten Innenraumbaugruppe, zum Beispiel eines Konsolenelements; und
- Fig. 5: eine schematische Ansicht eines Fahrzeuginnenraums mit verstellbaren Innenraumbaugruppen nach einem weiteren Ausführungsbeispiel.

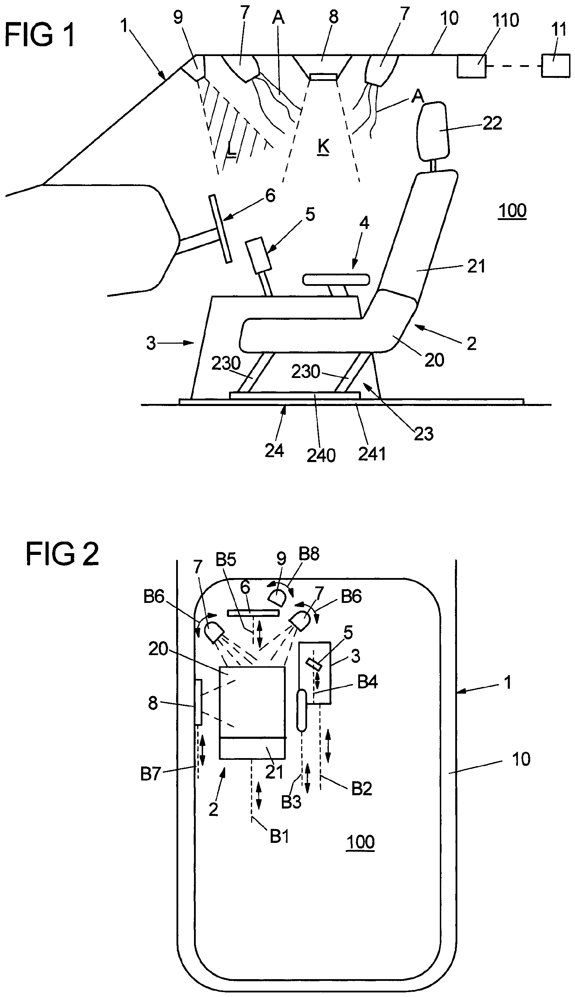

Fig. 1 und 2 zeigen in schematischen Ansichten ein Fahrzeug 1, das eine Fahrzeugkarosserie 10 aufweist und einen durch die Fahrzeugkarosserie 10 begrenzten Innenraum 100 ausbildet. In dem Innenraum 100 sind Innenraumbaugruppen 2-9 angeordnet, die zum Bereitstellen und Ausführen unterschiedlicher Funktionen in dem Fahrzeuginnenraum 100 dienen.

So ist im Innenraum 100 eine Innenraumbaugruppe in Form eines Fahrzeugsitzes 2 angeordnet, der durch ein Sitzteil 20 und ein verstellbar daran angeordnetes Rückenlehnenteil 21 sowie eine am oberen Ende des Rückenlehnenteils 21 angeordnete Kopfstütze 22 ausgebildet ist. Der Fahrzeugsitz 2 weist eine Höhenverstelleinrichtung 23 auf, über die der Fahrzeugsitz 2 mit einer Bodenbaugruppe in Form einer Längsverstelleinrichtung 24 gekoppelt ist. Die Höhenverstelleinrichtung 23 weist Schwenkelemente 230 auf, die verschwenkt werden können, um auf diese Weise die Höhe des Sitzteils 20 zu verstellen. Die Längsverstelleinrichtung 24 weist Führungsschienen 240, 241 auf, von denen eine obere Führungsschiene 240 mit den Schwenkelementen 230 verbunden ist und somit den Fahrzeugsitz 2 trägt, während eine untere Führungsschiene 241 mit einem Fahrzeugboden verbunden ist. Die obere Führungsschiene 240 ist zu der unteren Führungsschiene 241 längsverstellbar, sodass durch Bewegen der Führungsschienen 240, 241 zueinander die Längsposition des Fahrzeugsitzes 2 eingestellt werden kann.

Eine weitere Innenbaugruppe ist durch ein Konsolenelement 3 verwirklicht, das beispielsweise in Fahrzeugquerrichtung neben dem Fahrzeugsitz 2 angeordnet ist und zum Beispiel eine Armauflage 4 und eine Halteeinrichtung 5 zum Beispiel in Form einer Handyhalterung trägt. Weitere Funktionsbaugruppen, wie zum Beispiel ein Bedienelement, können an dem Konsolenelement angeordnet sein.

Ein Lenkrad 6 zum Lenken des Fahrzeugs 1 ist in bekannter Weise im Bereich eines Armaturenbretts des Fahrzeugs 1 angeordnet.

Lüftungseinrichtungen 7 in Form zum Beispiel von Düsen dienen zum Bereitstellen eines Luftstroms A und somit zur Belüftung und gegebenenfalls zum Einstellen einer Klimazone im Bereich des Fahrzeugsitzes 2.

Eine Klangerzeugungseinrichtung 8 in Form eines oder mehrerer Lautsprecher dient zum Erzeugen eines Klangfelds K im Bereich des Fahrzeugsitzes 2.

Eine Lichterzeugungseinrichtung 9 dient zum Beispiel zum Beleuchten oder zum Erzeugen eines Lichteffekts und erzeugt hierzu ein Lichtfeld L.

Weitere Innenbaugruppen zum Beispiel in Form von Bedienelementen, einer Gurthöhenverstellung, eines Gurtbringers, eines Displays oder dergleichen können vorhanden und im Innenraum 100 des Fahrzeugs 1 verstellbar sein.

Wie dies schematisch in Fig. 2 eingezeichnet ist, können die Innenraumbaugruppen 2-9 jeweils entlang zugeordneter Bewegungsbahnen B1-B8 im Innenraum 100 verstellbar sein.

Der Fahrzeugsitz 2 kann hierbei entlang einer zugeordneten, zum Beispiel durch die Führungsschienen 240, 241 der Längsverstelleinrichtung 24 vorgegebenen Bewegungsbahn B1 längsverstellbar sein, wobei zusätzlich auch Unterbaugruppen des Fahrzeugsitzes 2, insbesondere das Sitzteil 20, das Rückenlehnenteil 21 und die Kopfstütze 22, über jeweils zugeordnete Verstelleinrichtungen verstellbar sind.

Das Konsolenelement 3 kann zum Beispiel entlang einer Bewegungsbahn B2 im Innenraum 100 längsverstellbar sein, wobei die Bewegungsbahn B2 beispielsweise über Führungsschienen vorgegeben sein kann, über die das Konsolenelement 3 an dem Fahrzeugboden angeordnet ist.

Die Armauflage 4 ist beispielsweise an dem Konsolenelement 3 angeordnet und kann entlang einer Bewegungsbahn B3 relativ zum Konsolenelement 3 verstellbar sein.

Die Halteeinrichtung 5 ist ebenfalls an dem Konsolenelement 3 angeordnet und kann entlang einer Bewegungsbahn B4 beispielsweise längs an dem Konsolenelement 3 verstellbar sein.

Das Lenkrad 6 kann entlang einer Bewegungsbahn B5 zwischen unterschiedlichen Stellungen verstellbar sein und somit dem Fahrzeugsitz 2 angenähert oder von dem Fahrzeugsitz 2 entfernt werden. Zusätzlich kann auch eine Höheneinstellung des Lenkrads 6 möglich sein.

Düsen der Lüftungseinrichtung 7 können zum Beispiel verschwenkbar sein, wobei solche Düsen zum Beispiel im Bereich des Dachhimmels oder auch im Bereich von Säulen, zum Beispiel der A-, B- oder C-Säule der Fahrzeugkarosserie 10 angeordnet sein können. Eine jeweils zugeordnete Bewegungsbahn B6 wird in diesem Fall durch den Verschwenkweg der Düsen vorgegeben.

Die Klangerzeugungseinrichtung 8 kann beispielsweise entlang einer Bewegungsbahn B7 längsverstellbar und/oder verschwenkbar sein. Ein die Klangerzeugungseinrichtung 8 verwirklichender Lautsprecher kann beispielsweise im Bereich des Dachhimmels oder im Bereich einer Fahrzeugtür angeordnet sein.

Eine Lichterzeugungseinrichtung 9 in Form zum Beispiel einer Leselampe kann entlang einer Bewegungsbahn B8 zum Beispiel verschwenkbar sein und dazu beispielsweise im Bereich des Dachhimmels des Fahrzeugs angeordnet sein.

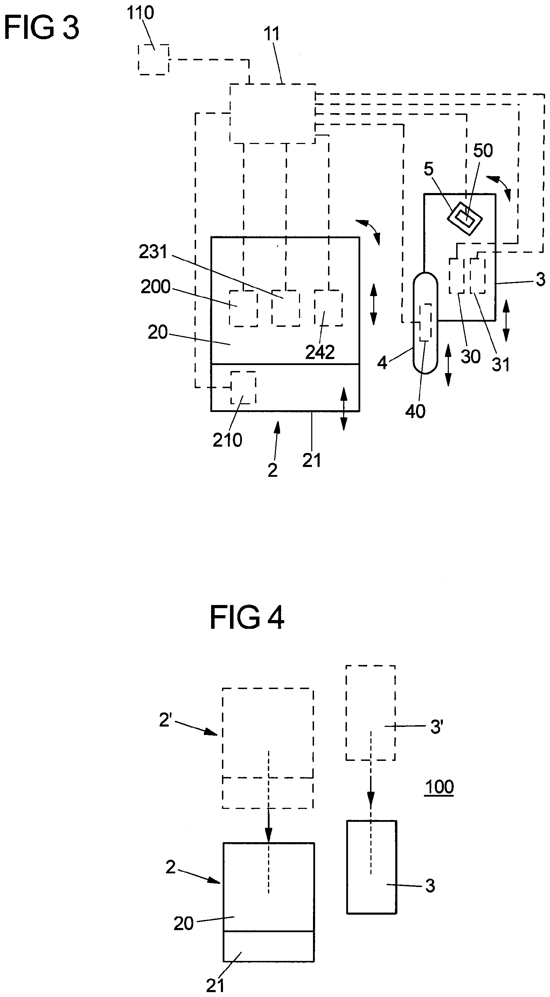

Wie dies schematisch in Fig. 3 dargestellt ist, können die Innenraumbaugruppen 2-9 durch zugeordnete Verstelleinrichtungen im Innenraum 100 verstellbar sein, sodass die Position und Ausrichtung der Innenraumbaugruppen 2-9 im Innenraum 100 angepasst werden kann. Fig. 3 veranschaulicht dies hierbei anhand einer Untergruppe der Innenraumbaugruppen 2-9, wobei grundsätzlich sämtliche Innenraumbaugruppen 2-9 im Innenraum 100 des Fahrzeugs 1 über je eine zugeordnete Verstelleinrichtung verstellbar sein können.

Bei dem in Fig. 3 dargestellten Beispiel weist der Fahrzeugsitz 2 Verstelleinrichtungen 200, 210, 231, 242 auf, die zum Verstellen des Fahrzeugsitzes 2 insgesamt oder zum Verstellen von Unterbaugruppen des Fahrzeugsitzes 2 dienen können. Über eine dem Sitzteil 20 zugeordnete Verstelleinrichtung 200 kann beispielsweise eine Drehstellung des Fahrzeugsitzes 2 im Fahrzeuginnenraum um eine Fahrzeugvertikalachse angepasst werden. Über eine Verstelleinrichtung 210, die dem Rückenlehnenteil 21 zugeordnet ist, kann beispielsweise die Neigungsstellung des Rückenlehnenteils 21 angepasst werden. Über eine Verstelleinrichtung 231, die der Sitzhöhenverstellung 23 zugeordnet ist, kann die Höhe des Sitzteils 20 relativ zum Fahrzeugboden eingestellt werden. Über eine Verstelleinrichtung 242, die der Längsverstelleinrichtung 24 zugeordnet ist, kann die Längsposition des Fahrzeugsitzes 2 im Innenraum 100 eingestellt werden.

Ebenso sind den weiteren Innenraumbaugruppen 3-9 Verstelleinrichtungen zugeordnet, die zum Verstellen der weiteren Innenraumbaugruppen 3-9 dienen. Bei dem Beispiel gemäß Fig. 3 sind dem Konsolenelement 3 Verstelleinrichtungen 30, 31 zugeordnet, über die die Drehstellung und die Längsposition des Konsolenelements 3 verstellt werden können. Der an dem Konsolenelement 3 angeordneten Armauflage 4 ist eine Verstelleinrichtung 40 zugeordnet, über die die Armauflage 4 längs an dem Konsolenelement 3 verstellt werden kann. Der Halteeinrichtung 5, zum Beispiel in Form einer Handyhalterung, ist eine Verstelleinrichtung 50 zugeordnet, über die eine Drehstellung und/oder eine Längsposition der Halteeinrichtung 5 an dem Konsolenelement 3 eingestellt werden kann.

Die Verstelleinrichtungen 200, 210, 231, 242, 30, 31, 40, 50 sind jeweils mit einer Steuereinrichtung 11 verbunden, die zur Steuerung der unterschiedlichen Verstelleinrichtungen 200, 210, 231, 242, 30, 31, 40, 50 dient. Die Steuereinrichtung 11 verwirklicht beispielsweise eine zentrale Steuerung in dem Fahrzeug 1 und kann auch zur Steuerung weiterer Funktionen des Fahrzeugs 1 dienen.

Die Verstelleinrichtungen 200, 210, 231, 242, 30, 31, 40, 50 können beispielsweise jeweils einen Elektromotor aufweisen, der ein elektromotorisches Verstellen der jeweils zugeordneten Innenraumbaugruppe 2-9 ermöglicht. Die Verstelleinrichtungen 200, 210, 231, 242, 30, 31, 40, 50 können zusätzlich gegebenenfalls aber auch ein manuelles Verstellen der jeweils zugeordneten Innenraumbaugruppe 2-9 ermöglichen.

Die Verstelleinrichtungen 200, 210, 231, 242, 30, 31, 40, 50 können zum Beispiel durch Spindelantriebe, Taumelantriebe, Planetenantriebe oder andere Antriebe zum Längsverstellen, Verschwenken oder Verdrehen einer jeweils zugeordneten Innenraumbaugruppe verwirklicht sein.

Im Rahmen von neuen Innenraumkonzepten kann eine Verstellbarkeit von Innenraumbaugruppen 2-9 über einen vergleichsweise großen Verstellweg in variabler Weise im Innenraum 100 eines Fahrzeugs 1 möglich sein. Beispielsweise kann eine Verstellbarkeit eines Fahrzeugsitz 2 derart möglich sein, dass der Fahrzeugsitz 2 aus einer vorderen Position in eine hintere Position im Innenraum 100 gebracht werden kann, wobei zusätzlich gegebenenfalls beispielsweise eine Drehstellung des Fahrzeugsitzes 2 angepasst werden kann, sodass der Fahrzeugsitz 2 beispielsweise anderen Fahrzeugsitzen zugewandt werden kann.

Für eine solche flexible, in weitem Umfang mögliche Verstellbarkeit von Innenraumbaugruppen 2-9 besteht ein Bedürfnis danach, eine Verstellung für einen Nutzer so einfach und komfortabel wie möglich zu gestalten.

Vor diesem Hintergrund wird vorliegend vorgeschlagen, die Verstellbewegung von grundsätzlich voneinander unabhängigen, baulich getrennten Innenraumbaugruppen so aufeinander abzustimmen, dass eine Verstellbewegung einer ersten Innenraumbaugruppe 2 das Nachstellen einer oder mehrerer anderer, zweiter Innenraumbaugruppen 3-9 bewirkt. Wird eine erste Innenraumbaugruppe 2 verstellt, werden somit eine oder mehrere weitere, zweite Innenraumbaugruppen 3-9 nachgestellt, sodass die zweiten Innenraumbaugruppen 3-9 in automatischer Weise in eine Position gebracht werden, die von der neu eingestellten Position der ersten Innenraumbaugruppe 2 abhängt.

Dies ist in Fig. 4 anhand des Fahrzeugsitzes 2 und des Konsolenelements 3 veranschaulicht. Bei der ersten Innenraumbaugruppe handelt es sich hierbei um den Fahrzeugsitz 2. Die nachgestellte, zweite Innenraumbaugruppe ist durch das Konsolenelement 3 verwirklicht.

Wird der Fahrzeugsitz 2 aus einer vorher eingenommenen Stellung, dargestellt in Fig. 4 anhand des gestrichelt dargestellten Fahrzeugsitzes 2', in eine neue Position verstellt, beispielsweise indem der Fahrzeugsitz 2 längs nach hinten verschoben wird, so wird die zweite Innenraumbaugruppe in Form des Konsolenelements 3 derart nachgestellt, dass das Konsolenelement 3 aus einer vorherigen Position, dargestellt in Fig. 4 anhand des gestrichelt eingezeichneten Konsolenelements 3', in eine neu eingestellte Position verstellt wird, die von der Verstellposition des Fahrzeugsitzes 2 abhängt. Beispielsweise kann das Konsolenelement 3 in eine solche Position zu dem Fahrzeugsitz 2 gebracht werden, dass das Konsolenelement 3 wiederum zumindest näherungsweise die gleiche Relativlage wie vorher zu dem Fahrzeugsitz 2 einnimmt und somit für einen Fahrzeuginsassen in gleicher Weise zugänglich ist.

Der Fahrzeugsitz 2 kann hierbei grundsätzlich in beliebige, individuell einstellbare Stellungen entlang einer definierten Bewegungsbahn im Innenraum 100 zu verstellen sein, wie dies in Fig. 4 dargestellt ist. Eine solche Bewegungsbahn kann zum Beispiel durch Führungsschienen oder durch eine definierte Beweglichkeit, zum Beispiel in Form einer Verschwenkbarkeit, vorgegeben werden.

Ebenso kann das Konsolenelement 3 (oder andere Innenraumbaugruppen 4-9) entlang einer definierten Bewegungsbahn im Innenraum 100 zu bewegen sein, wobei das Konsolenelement 3 grundsätzlich beliebige Stellungen entlang der zugeordneten Bewegungsbahn einnehmen kann, im Rahmen eines Nachstellvorgangs aber in eine Stellung gebracht wird, die von der Verstellposition des Fahrzeugsitzes 2 abhängt.

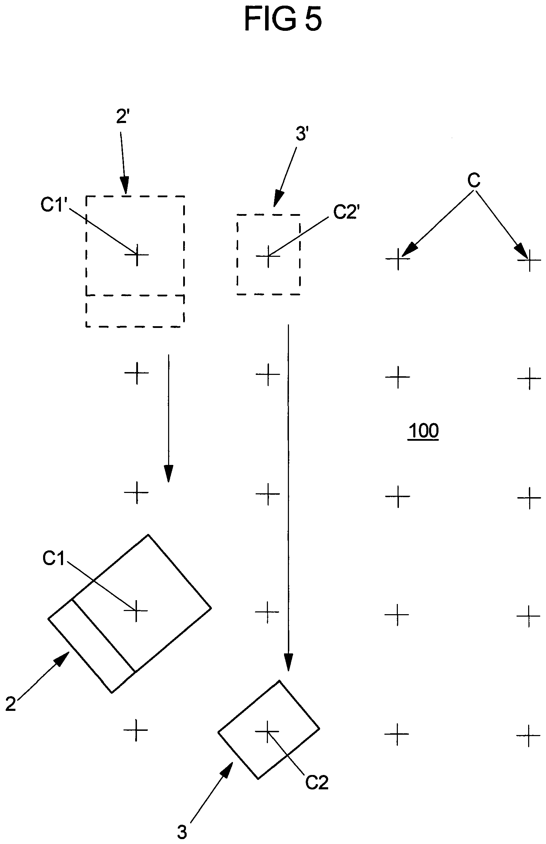

Wie dies in Fig. 5 veranschaulicht ist, können Innenraumbaugruppen 2-9 zum Beispiel in Form eines Fahrzeugsitzes 2 oder eines Konsolenelements 3 in einem anderen Ausführungsbeispiel im Wesentlichen frei und gleitend entlang eines Fahrzeugbodens zu verstellen sein, wie dies zum Beispiel in der nicht vorveröffentlichten deutschen Patentanmeldung mit dem Aktenzeichen 10 2019 213 012.7 beschrieben ist. Ein Fahrzeugsitz 2 und ein Konsolenelement 3 können hierbei beispielsweise zwischen Ankerpunkten C zu verstellen sein, wobei der Fahrzeugsitz 2 und das Konsolenelement 3 beispielsweise hin zu beliebigen Ankerpunkten C verfahren werden können, um an einem jeweils erreichten Ankerpunkt C mit dem Fahrzeugboden zu verriegeln.

Auch bei dem Ausführungsbeispiel gemäß Fig. 5 wird hierbei das Konsolenelement 3 in Abhängigkeit einer Verstellbewegung des Fahrzeugsitzes 2 nachgeführt, wobei bei dem Beispiel gemäß Fig. 5 der Fahrzeugsitz 2 beispielsweise zum einen in seiner Längsposition von einem bisherigen Ankerpunkt C1' hin zu einem neuen Ankerpunkt C1 verstellt und zudem verdreht wird und entsprechend auch das Konsolenelement 3 längs von einem bisherigen Ankerpunkt C2' hin zu einem neuen Ankerpunkt C2 verstellt und zudem verdreht wird. Der neue Ankerpunkt C2 und die Drehstellung des Konsolenelements 3 werden hierbei in Abhängigkeit von der Verstellstellung des Fahrzeugsitzes 2 bestimmt, und entsprechend wird die Nachstellbewegung des Konsolenelements 3 durch die Steuereinrichtung 11 gesteuert.

In einer Ausgestaltung ist eine Sensoreinrichtung 110 in Form eines Innenraumüberwachungssystems mit der Steuereinrichtung 11 verbunden. Über die Sensoreinrichtung 110 können die Stellungen der unterschiedlichen Innenraumbaugruppen 2-9 detektiert werden, sodass in Abhängigkeit von der Stellung einer Innenraumbaugruppe 2 beispielsweise die Stellung einer oder mehrerer weiterer Innenraumbaugruppen 3-9 angepasst werden kann.

Eine Nachstellbewegung einer (zweiten) Innenraumbaugruppe 3-9 in Abhängigkeit einer Verstellbewegung einer (ersten) Innenraumbaugruppe 2 kann synchron mit der Verstellbewegung der (ersten) Innenraumbaugruppe 2 erfolgen. Alternativ kann die Nachstellbewegung nach erfolgter Verstellung der (ersten) Innenraumbaugruppe 2 vorgenommen werden, sodass zunächst die Verstellbewegung der (ersten) Innenraumbaugruppe 2 abgeschlossen wird und sodann die weitere (zweite) Innenraumbaugruppe 3-9 in Abhängigkeit von der dann eingenommenen Stellung der (ersten) Innenraumbaugruppe 2 nachgestellt wird.

Eine Nachstellbewegung der zweiten Innenraumbaugruppe 3-9 kann automatisiert und stets bei Verstellen einer ersten Innenraumbaugruppe 2 erfolgen.

Alternativ kann eine Verstellbewegung der zweiten Innenraumbaugruppe 3-9 aber auch von einem zusätzlichen Verstellkriterium abhängen, sodass in Abhängigkeit von einer Prüfung des zusätzlichen Verstellkriteriums durch die Steuereinrichtung 11 eine Verstellbewegung der zweiten Innenraumbaugruppe 3-9 gar nicht oder in modifizierter Weise erfolgt.

Bei einem solchen Verstellkriterium kann es sich beispielsweise um ein Bedienereignis eines Nutzers handeln. Beispielsweise kann ein Nutzer durch Voreinstellung über eine Eingabeeinrichtung, zum Beispiel einen Schalter oder Taster, vorgeben, dass ein Nachstellen der zweiten Innenraumbaugruppe 3-9 stets erfolgen soll oder gar nicht erfolgen soll.

Zusätzlich oder alternativ kann als Verstellkriterium ausgewertet werden, ob die zweite Innenraumbaugruppe 3-9 in Benutzung ist oder nicht. Ist ein Display beispielsweise in Benutzung, so erfolgt beispielsweise ein Nachstellen des Displays. Ist das Display demgegenüber abgeschaltet, wird das Display gegebenenfalls bei einer Bewegung eines Fahrzeugsitzes nicht nachgestellt. Ebenso kann ein Belegungszustand eines Getränkehalters oder ein Betriebszustand einer Lüftungseinrichtung geprüft werden, um eine Nachstellung in Abhängigkeit von dem Belegungszustand bzw. dem Betriebszustand vorzunehmen.

Wiederum zusätzlich oder alternativ kann geprüft werden, ob eine Nutzung der zweiten Innenraumbaugruppe 3-9 an der Zielposition der ersten Innenraumbaugruppe 2 noch sinnvoll ist, um ein Nachstellen der zweiten Innenraumbaumbaugruppe 3-9 lediglich dann zu bewirken, wenn eine Nutzung an der Zielposition der ersten Innenraumbaugruppe 2 als sinnvoll identifiziert wird. Beispielsweise erfolgt gegebenenfalls ein Nachstellen eines Displays nicht, wenn ein Fahrzeugsitz aus einer aufrechten Position in eine Liegeposition gebracht wird, weil in diesem Fall davon ausgegangen werden kann, dass in der Liegeposition des Fahrzeugsitzes keine Nutzung des Displays mehr erfolgen soll. Wird ein Fahrzeugsitz um 180° von einer nach vorne blickenden Stellung in eine nach hinten blickende Stellung verdreht, so wird eine Lüftungseinrichtung im Bereich des Armaturenbretts vorne im Fahrzeug gegebenenfalls nicht nachgestellt.

Wiederum zusätzlich oder alternativ kann das Nachstellen der zweiten Innenraumbaugruppe 3-9 von einer Kollisionserkennung abhängig gemacht werden. Wird durch eine Kollisionserkennungseinrichtung, zum Beispiel verwirklicht durch ein Innenraumüberwachungssystem, erkannt, dass im Bewegungsweg der zweiten Innenraumbaugruppe 3-9 ein Hindernis besteht, so kann ein Verstellen der zweiten Innenraumbaugruppe 3-9 gegebenenfalls unterbunden werden.

Wiederum zusätzlich oder alternativ kann das Nachstellen der zweiten Innenraumbaugruppe 3-9 von einem Fahrzeugbetriebszustand abhängig gemacht werden. Beispielsweise wird bei Stillstand des Fahrzeugs das Nachstellen der zweiten Innenraumbaugruppe 3-9 in anderer Weise vorgenommen als bei Fahrt des Fahrzeugs. Zudem kann das Nachstellen zum Beispiel von einer Fahrgeschwindigkeit abhängig gemacht werden, indem beispielsweise bei niedrigeren Geschwindigkeiten ein Nachstellen in anderem Umfang erfolgt als bei hohen Fahrgeschwindigkeiten.

Wiederum zusätzlich oder alternativ kann als Verstellkriterium ein Belegungszustand eines oder mehrerer Fahrzeugsitze geprüft werden. Ist beispielsweise nur der Fahrersitz belegt, so kann eine Verstellung von zweiten Innenraumbaugruppen 3-9, die auf den Fahrersitz bezogen sind, in Abhängigkeit von der Verstellung des Fahrersitzes (der in diesem Fall eine erste Innenraumbaugruppe verwirklicht, erfolgen. Ist zusätzlich der Beifahrersitz belegt, kann das Nachstellen der zweiten Innenraumbaugruppe 3-9 jedoch modifiziert werden, um einzelne zweite Innenraumbaugruppen, zum Beispiel Lüfterelemente oder ein Display, nicht oder in anderem Umfang zu verstellen. Zudem kann ein Nachstellen einer zweiten Innenraumbaugruppe, zum Beispiel einer Mittelkonsole, modifiziert werden, wenn festgestellt wird, dass eine hintere Sitzreihe durch einen oder mehrere Fahrzeuginsassen belegt ist, um zu verhindern, dass durch das Verstellen der Mittelkonsole ein Komfort für die Fahrzeuginsassen auf der hintere Sitzreihe verringert wird.

Der der Erfindung zugrunde liegende Gedanke ist nicht auf die vorangehend geschilderten Ausführungsbeispiele beschränkt, sondern lässt sich auch in anderer Weise verwirklichen.

Grundsätzlich können ganz unterschiedliche Innenraumbaugruppen in einem Fahrzeuginnenraum zu verstellen sein, wobei die Verstellbewegung einer oder mehrerer Innenraumbaugruppen von einem Verstellvorgang an einer anderen Innenraumbaugruppe abhängen kann. So kann eine erste Innenraumbaugruppe beispielsweise durch einen Fahrzeugsitz verwirklicht sein, dessen Verstellbewegung ein Nachstellen anderer Innenraumbaugruppen bewirkt. Eine solche erste Innenraumbaugruppe, in Abhängigkeit derer ein Nachstellen anderer Innenraumbaugruppen erfolgt, kann jedoch auch durch eine andere Funktionseinheit verwirklicht sein.

Die erste Innenraumbaugruppe kann grundsätzlich individuell durch einen Nutzer verstellt werden, ist also nicht auf eine Verstellbewegung zwischen definierten Endpunkten beschränkt. In Abhängigkeit von einer individuell eingestellten Stellung der ersten Innenraumbaugruppe erfolgt ein Nachstellen der zweiten Innenraumbaugruppe, sodass die neu eingestellte Position der zweiten Innenraumbaugruppe von der Stellung der ersten Innenraumbaugruppe abhängt.

### Bezugszeichenliste

- 1: Kraftfahrzeug
- 10: Fahrzeugkarosserie
- 100: Innenraum
- 11: Steuereinrichtung
- 110: Sensoreinrichtung
- 2, 2': Innenraumbaugruppe (Fahrzeugsitz)
- 20: Sitzteil
- 200: Verstelleinrichtung
- 21: Rückenlehnenteil
- 210: Verstelleinrichtung
- 22: Kopfstütze
- 23: Höhenverstelleinrichtung
- 230: Schwenkelement
- 231: Verstelleinrichtung
- 24: Längsverstelleinrichtung
- 240, 241: Führungsschiene
- 242: Verstelleinrichtung
- 3, 3': Innenraumbaugruppe (Konsolenelement)
- 30, 31: Verstelleinrichtung
- 4: Innenraumbaugruppe (Armauflage)
- 40: Verstelleinrichtung
- 5: Innenraumbaugruppe (Halteeinrichtung)
- 50: Verstelleinrichtung
- 6: Innenraumbaugruppe (Lenkrad)
- 7: Innenraumbaugruppe (Lüftungseinrichtung)
- 8: Innenraumbaugruppe (Klangerzeugungseinrichtung)
- 9: Innenraumbaugruppe (Lichterzeugungseinrichtung)
- A: Luftstrom
- B1-B8: Bewegungsbahn
- C: Ankerpunkte
- C1, C1': Ankerpunkte
- C2, C2': Ankerpunkte
- K: Klangfeld
- L: Licht

## Patentansprüche

1. Innenraumverstellsystem für ein Fahrzeug (1), mit
einer ersten Innenraumbaugruppe (2), die eine erste Verstelleinrichtung (200, 210, 231, 242) zum Verstellen der ersten Innenraumbaugruppe (2) aufweist,
zumindest einer zweiten Innenraumbaugruppe (3-9), die eine zweite Verstelleinrichtung (30, 31, 40, 50) zum Verstellen der zumindest einen zweiten Innenraumbaugruppe (3-9) aufweist, und
einer Steuereinrichtung (11),
wobei die Steuereinrichtung (11) ausgebildet ist, die zweite Verstelleinrichtung (30, 31, 40, 50) zum Verstellen der zumindest einen zweiten Innenraumbaugruppe (3-9) in Abhängigkeit einer Verstellbewegung der ersten Innenraumbaugruppe (2) anzusteuern,
wobei die erste Innenraumbaugruppe (2) durch Betätigung der ersten Verstelleinrichtung (200, 210, 231, 242) aus einer aktuellen, ersten Stellung in eine verstellte, zweite Stellung bewegbar ist, wobei die Steuereinrichtung (11) ausgebildet ist, die zweite Verstelleinrichtung (30, 31, 40, 50) zum Verstellen der zumindest einen zweiten Innenraumbaugruppe (3-9) aus einer aktuellen, ersten Funktionsstellung in eine von der zweiten Stellung der ersten Innenraumbaugruppe (2) abhängige, verstellte, zweite Funktionsstellung anzusteuern,
wobei die Steuereinrichtung (11) ausgebildet ist, ein Verstellkriterium zu prüfen und die zweite Verstelleinrichtung (30, 31, 40, 50) zum Verstellen der zumindest einen zweiten Innenraumbaugruppe (3-9) aus der aktuellen, ersten Funktionsstellung in die verstellte, zweite Funktionsstellung in Abhängigkeit von der Prüfung des Verstellkriteriums anzusteuern,
**dadurch gekennzeichnet, dass** die Steuereinrichtung (11) ausgebildet ist, als Verstellkriterium einen Belegungszustand eines oder mehrerer Fahrzeugsitze auszuwerten,
wobei die Steuereinrichtung (11) ausgebildet ist, zur Prüfung des Belegungszustands eines oder mehrerer Fahrzeugsitze zu prüfen, ob sich ein Fahrzeuginsasse auf einem bestimmten Fahrzeugsitz befindet und ob gleichzeitig auch noch weitere Fahrzeugsitze belegt sind.

2. Innenraumverstellsystem nach Anspruch 1, **dadurch gekennzeichnet, dass** die erste Innenraumbaugruppe (2) ein Fahrzeugsitz oder eine Baugruppe eines Fahrzeugsitzes ist.

3. Innenraumverstellsystem nach Anspruch 2, **dadurch gekennzeichnet, dass** die erste Verstelleinrichtung (200, 210, 231, 242) durch eine Sitzlängsverstelleinrichtung, eine Sitzhöhenverstelleinrichtung oder eine Rückenlehnenneigungsverstelleinrichtung ausgebildet ist.

4. Innenraumverstellsystem nach einem der Ansprüche 1 bis 3, **dadurch gekennzeichnet, dass** die zumindest eine zweite Innenraumbaugruppe (3-9) ein Konsolenelement, eine Armauflage, eine Halteeinrichtung zum Halten einer Funktionsbaugruppe, eine Lüftungseinrichtung, eine Klangerzeugungseinrichtung, eine Lichterzeugungseinrichtung, ein Display, ein Bedienelement oder eine Ablageeinrichtung ist.

5. Innenraumverstellsystem nach einem der vorangegangenen Ansprüche, **dadurch gekennzeichnet, dass** die erste Verstelleinrichtung (200, 210, 231, 242) einen Elektromotor zum elektromotorischen Verstellen der ersten Innenraumbaugruppe (2) aufweist.

6. Innenraumverstellsystem nach einem der vorangegangenen Ansprüche, **dadurch gekennzeichnet, dass** die zweite Verstelleinrichtung (30, 31, 40, 50) einen Elektromotor zum elektromotorischen Verstellen der zweiten Innenraumbaugruppe (3-9) aufweist.

7. Innenraumverstellsystem nach einem der vorangegangenen Ansprüche, **dadurch gekennzeichnet, dass** die Steuereinrichtung (11) ausgebildet ist, die zweite Funktionsstellung in Abhängigkeit von dem Verstellkriterium zu bestimmen.

8. Innenraumverstellsystem nach einem der vorangegangenen Ansprüche, **dadurch gekennzeichnet, dass** die erste Innenraumbaugruppe (2) entlang einer ersten Bewegungsbahn (B1) in einem Fahrzeuginnenraum (100) verstellbar ist.

9. Innenraumverstellsystem nach Anspruch 8, **dadurch gekennzeichnet, dass** die erste Innenraumbaugruppe (2) in eine Mehrzahl von unterschiedlichen Stellungen entlang der ersten Bewegungsbahn (B1) bringbar ist.

10. Innenraumverstellsystem nach Anspruch 8 oder 9, **dadurch gekennzeichnet, dass** die zumindest eine zweite Innenraumbaugruppe (3-9) entlang einer zweiten Bewegungsbahn (B2-B8) in dem Fahrzeuginnenraum (100) verstellbar ist.

11. Innenraumverstellsystem nach Anspruch 10, **dadurch gekennzeichnet, dass** die zumindest eine zweite Innenraumbaugruppe (3-9) in eine Mehrzahl von unterschiedlichen Stellungen entlang der zweiten Bewegungsbahn (B2-B8) bringbar ist.

12. Innenraumverstellsystem nach einem der vorangegangenen Ansprüche, **gekennzeichnet durch** eine Sensoreinrichtung (110) zum Erfassen einer Stellung der ersten Innenraumbaugruppe (2) und/oder der zumindest einen zweiten Innenraumbaugruppe (3-9), wobei die Steuereinrichtung (11) ausgebildet ist, ein Sensorsignal der Sensoreinrichtung (110) zum Steuern der zweiten Verstelleinrichtung (30, 31, 40, 50) auszuwerten.

13. Innenraumverstellsystem nach Anspruch 12, **dadurch gekennzeichnet, dass** die Sensoreinrichtung (110) ein Innenraumüberwachungssystem ist.

14. Verfahren zum Verstellen von Innenraumbaugruppen in einem Innenraum (100) eines Fahrzeugs (1), aufweisend:
Verstellen einer ersten Innenraumbaugruppe (2) unter Verwendung einer ersten Verstelleinrichtung (200, 210, 231, 242),
Verstellen zumindest einer zweiten Innenraumbaugruppe (3-9) unter Verwendung einer zweiten Verstelleinrichtung (30, 31, 40, 50) und
Steuern der zweiten Verstelleinrichtung (30, 31, 40, 50) zum Verstellen der zumindest einen zweiten Innenraumbaugruppe (3-9) in Abhängigkeit einer Verstellbewegung der ersten Innenraumbaugruppe (2)
wobei die erste Innenraumbaugruppe (2) durch Betätigung der ersten Verstelleinrichtung (200, 210, 231, 242) aus einer aktuellen, ersten Stellung in eine verstellte, zweite Stellung bewegbar ist, wobei eine Steuereinrichtung (11) die zweite Verstelleinrichtung (30, 31, 40, 50) zum Verstellen der zumindest einen zweiten Innenraumbaugruppe (3-9) aus einer aktuellen, ersten Funktionsstellung in eine von der zweiten Stellung der ersten Innenraumbaugruppe (2) abhängige, verstellte, zweite Funktionsstellung ansteuert,
wobei die Steuereinrichtung (11) ein Verstellkriterium prüft und die zweite Verstelleinrichtung (30, 31, 40, 50) zum Verstellen der zumindest einen zweiten Innenraumbaugruppe (3-9) aus der aktuellen, ersten Funktionsstellung in die verstellte, zweite Funktionsstellung in Abhängigkeit von der Prüfung des Verstellkriteriums ansteuert,
**dadurch gekennzeichnet, dass** die Steuereinrichtung (11) als Verstellkriterium einen Belegungszustand eines oder mehrerer Fahrzeugsitze auswertet,
wobei die Steuereinrichtung (11) zur Prüfung des Belegungszustands eines oder mehrerer Fahrzeugsitze prüft, ob sich ein Fahrzeuginsasse auf einem bestimmten Fahrzeugsitz befindet und ob gleichzeitig auch noch weitere Fahrzeugsitze belegt sind.

## Claims

1. Interior adjustment system for a vehicle (1), comprising
a first interior assembly (2) which has a first adjustment device (200, 210, 231, 242) for adjusting the first interior assembly (2),
at least one second interior assembly (3 - 9) which has a second adjustment device (30, 31, 40, 50) for adjusting the at least one second interior assembly (3 - 9), and
a controller (11),
wherein the controller (11) is configured to activate the second adjustment device (30, 31, 40, 50) in order to adjust the at least one second interior assembly (3 - 9) depending on an adjustment movement of the first interior assembly (2),
wherein the first interior assembly (2) can be moved by actuating the first adjustment device (200, 210, 231, 242) from a current first position into an adjusted second position, wherein the controller (11) is configured to actuate the second adjustment device (30, 31, 40, 50) in order to adjust the at least one second interior assembly (3 - 9) from a current first functional position into an adjusted second functional position that is dependent on the second position of the first interior assembly (2),
wherein the controller (11) is configured to monitor an adjustment criterion and to actuate the second adjustment device (30, 31, 40, 50) to adjust the at least one second interior assembly (3 - 9) from the current first functional position into the adjusted second functional position depending on the monitoring of the adjustment criterion,
**characterized in that** the controller (11) is configured to evaluate an occupancy state of one or more vehicle seats, as the adjustment criterion,
wherein the controller (11) is configured, for monitoring the occupancy state of one or more vehicle seats, to monitor whether a vehicle occupant is on a particular vehicle seat and whether, at the same time, further vehicle seats are also occupied.

2. Interior adjustment system according to claim 1, **characterized in that** the first interior assembly (2) is a vehicle seat or an assembly of a vehicle seat.

3. Interior adjustment system according to claim 2, **characterized in that** the first adjustment device (200, 210, 231, 242) is configured by a seat longitudinal adjustment device, a seat height adjustment device or a backrest inclination adjustment device.

4. Interior adjustment system according to any of claims 1 to 3, **characterized in that** the at least one second interior assembly (3 - 9) is a console element, an armrest, a holding device for holding a functional assembly, a ventilation device, a sound generating device, a light generating device, a display, an operating element or a storage device.

5. Interior adjustment system according to any of the preceding claims, **characterized in that** the first adjustment device (200, 210, 231, 242) has an electric motor for adjusting the first interior assembly (2) by electric motor.

6. Interior adjustment system according to any of the preceding claims, **characterized in that** the second adjustment device (31, 31, 40, 50) has an electric motor for adjusting the second interior assembly (3 - 9) by electric motor.

7. Interior adjustment system according to any of the preceding claims, **characterized in that** the controller (11) is configured to determine the second functional position depending on the adjustment criterion.

8. Interior adjustment system according to any of the preceding claims, **characterized in that** the first interior assembly (2) is adjustable along a first movement path (B1) in a vehicle interior (100).

9. Interior adjustment system according to claim 8, **characterized in that** the first interior assembly (2) is able to be moved into a plurality of different positions along the first movement path (B1).

10. Interior adjustment system according to either claim 8 or claim 9, **characterized in that** the at least one second interior assembly (3 - 9) is adjustable along a second movement path (B2 - B8) in the vehicle interior (100).

11. Interior adjustment system according to claim 10, **characterized in that** the at least one second interior assembly (3 - 9) is able to be moved into a plurality of different positions along the second movement path (B2 - B8).

12. Interior adjustment system according to any of the preceding claims, **characterized by** a sensor device (110) for detecting a position of the first interior assembly (2) and/or the at least one second interior assembly (3 - 9), wherein the controller (11) is configured to evaluate a sensor signal of the sensor device (110) for controlling the second adjustment device (30, 31, 40, 50).

13. Interior adjustment system according to claim 12, **characterized in that** the sensor device (110) is an interior monitoring system.

14. Method for adjusting interior assemblies in an interior (100) of a vehicle (1), comprising:
adjusting a first interior assembly (2) by using a first adjustment device (200, 210, 231, 242),
adjusting at least one second interior assembly (3 - 9) by using a second adjustment device (30, 31, 40, 50), and
controlling the second adjustment device (30, 31, 40, 50) in order to adjust the at least one second interior assembly (3 - 9) depending on an adjustment movement of the first interior assembly (2),
wherein the first interior assembly (2) can be moved by actuating the first adjustment device (200, 210, 231, 242) from a current first position into an adjusted second position, wherein the controller (11) actuates the second adjustment device (30, 31, 40, 50) in order to adjust the at least one second interior assembly (3 - 9) from a current first functional position into an adjusted second functional position that is dependent on the second position of the first interior assembly (2),
wherein the controller (11) monitors an adjustment criterion and actuates the second adjustment device (30, 31, 40, 50) to adjust the at least one second interior assembly (3 - 9) from the current first functional position into the adjusted second functional position depending on the monitoring of the adjustment criterion,
**characterized in that** the controller (11) evaluates an occupancy state of one or more vehicle seats, as the adjustment criterion,
wherein the controller (11) monitors the occupancy state of one or more vehicle seats, to monitor whether a vehicle occupant is on a particular vehicle seat and whether, at the same time, further vehicle seats are also occupied.

## Revendications

1. Système d'ajustement d'habitacle pour un véhicule (1), avec
un premier module d'habitacle (2), qui présente un premier dispositif d'ajustement (200, 210, 231, 242) destiné à ajuster le premier module d'habitacle (2),
au moins un deuxième module d'habitacle (3 - 9), qui présente un deuxième dispositif d'ajustement (30, 31, 40, 50) destiné à ajuster l'au moins un deuxième module d'habitacle (3 - 9), et
un dispositif de commande (11),
dans lequel le dispositif de commande (11) est configuré pour piloter le deuxième dispositif d'ajustement (30, 31, 40, 50) pour ajuster l'au moins un deuxième module d'habitacle (3 - 9) en fonction d'un déplacement d'ajustement du premier module d'habitacle (2),
dans lequel le premier module d'habitacle (2) peut être déplacé depuis une première position actuelle dans une deuxième position ajustée par l'actionnement du premier dispositif d'ajustement (200, 210, 231, 242), dans lequel le dispositif de commande (11) est configuré pour piloter le deuxième dispositif d'ajustement (30, 31, 40, 50) pour ajuster l'au moins un deuxième module d'habitacle (3 - 9) depuis une première position fonctionnelle actuelle dans une deuxième position fonctionnelle ajustée dépendante de la deuxième position du premier module d'habitacle (2),
dans lequel le dispositif de commande (11) est configuré pour vérifier un critère d'ajustement et pour piloter le deuxième dispositif d'ajustement (30, 31, 40, 50) pour ajuster l'au moins un deuxième module d'habitacle (3 - 9) depuis la première position fonctionnelle actuelle dans la deuxième position fonctionnelle ajustée en fonction de la vérification du critère d'ajustement,
**caractérisé en ce que** le dispositif de commande (11) est configuré pour évaluer un état d'occupation d'un ou de plusieurs sièges de véhicule en tant que critère d'ajustement,
dans lequel le dispositif de commande (11), pour vérifier l'état d'occupation d'un ou de plusieurs sièges de véhicule, est configuré pour vérifier si un occupant du véhicule se trouve sur un siège de véhicule donné et si dans le même temps encore d'autres sièges de véhicule sont également occupés.

2. Système d'ajustement d'habitacle selon la revendication 1, **caractérisé en ce que** le premier module d'habitacle (2) est un siège de véhicule ou un module d'un siège de véhicule.

3. Système d'ajustement d'habitacle selon la revendication 2, **caractérisé en ce que** le premier dispositif d'ajustement (200, 210, 231, 242) est réalisé par un dispositif d'ajustement longitudinal de siège, un dispositif d'ajustement de hauteur de siège ou un dispositif d'ajustement d'inclinaison de dossier.

4. Système d'ajustement d'habitacle selon l'une quelconque des revendications 1 à 3, **caractérisé en ce que** l'au moins un deuxième module d'habitacle (3 - 9) est un élément de console, un accoudoir, un dispositif de maintien destiné à maintenir un module fonctionnel, un dispositif de ventilation, un dispositif de production de son, un dispositif de production de lumière, un écran, un élément de commande ou un dispositif de rangement.

5. Système d'ajustement d'habitacle selon l'une quelconque des revendications précédentes, **caractérisé en ce que** le premier dispositif d'ajustement (200, 210, 231, 242) présente un moteur électrique pour ajuster de manière électromotrice le premier module d'habitacle (2).

6. Système d'ajustement d'habitacle selon l'une quelconque des revendications précédentes, **caractérisé en ce que** le deuxième dispositif d'ajustement (30, 31, 40, 50) présente un moteur électrique pour ajuster de manière électromotrice le deuxième module d'habitacle (3 - 9).

7. Système d'ajustement d'habitacle selon l'une quelconque des revendications précédentes, **caractérisé en ce que** le dispositif de commande (11) est configuré pour définir la deuxième position fonctionnelle en fonction du critère d'ajustement.

8. Système d'ajustement d'habitacle selon l'une quelconque des revendications précédentes, **caractérisé en ce que** le premier module d'habitacle (2) peut être ajusté dans un habitacle de véhicule (100) le long d'une première trajectoire de déplacement (B1).

9. Système d'ajustement d'habitacle selon la revendication 8, **caractérisé en ce que** le premier module d'habitacle (2) peut être amené dans une multitude de positions différentes le long de la première trajectoire de déplacement (B1).

10. Système d'ajustement d'habitacle selon la revendication 8 ou 9, **caractérisé en ce que** l'au moins un deuxième module d'habitacle (3 - 9) peut être ajusté dans l'habitacle de véhicule (100) le long d'une deuxième trajectoire de déplacement (B2 - B8).

11. Système d'ajustement d'habitacle selon la revendication 10, **caractérisé en ce que** l'au moins un deuxième module d'habitacle (3 - 9) peut être amené dans une multitude de positions différentes le long de la deuxième trajectoire de déplacement (B2 - B8).

12. Système d'ajustement d'habitacle selon l'une quelconque des revendications précédentes, **caractérisé par** un dispositif de capteur (110) destiné à détecter une position du premier module d'habitacle (2) et/ou de l'au moins un deuxième module d'habitacle (3 - 9), dans lequel le dispositif de commande (11) est configuré pour évaluer un signal de capteur du dispositif de capteur (110) pour commander le deuxième dispositif d'ajustement (30, 31, 40, 50).

13. Système d'ajustement d'habitacle selon la revendication 12, **caractérisé en ce que** le dispositif de capteur (110) est un système de surveillance d'habitacle.

14. Procédé d'ajustement de modules d'habitacle dans un habitacle (100) d'un véhicule (1), présentant :
l'ajustement d'un premier module d'habitacle (2) en utilisant un premier dispositif d'ajustement (200, 210, 231, 242),
l'ajustement d'au moins un deuxième module d'habitacle (3 - 9) en utilisant un deuxième dispositif d'ajustement (30, 31, 40, 50), et
la commande du deuxième dispositif d'ajustement (30, 31, 40, 50) pour ajuster l'au moins un deuxième module d'habitacle (3 - 9) en fonction d'un déplacement d'ajustement du premier module d'habitacle (2),
dans lequel le premier module d'habitacle (2) peut être déplacé depuis une première position actuelle dans une deuxième position ajustée par l'actionnement du premier dispositif d'ajustement (200, 210, 231, 242), dans lequel un dispositif de commande (11) pilote le deuxième dispositif d'ajustement (30, 31, 40, 50) pour ajuster l'au moins un deuxième module d'habitacle (3 - 9) depuis une première position fonctionnelle actuelle dans une deuxième position fonctionnelle ajustée dépendante de la deuxième position du premier module d'habitacle (2),
dans lequel le dispositif de commande (11) vérifie un critère d'ajustement et pilote le deuxième dispositif d'ajustement (30, 31, 40, 50) pour ajuster l'au moins un deuxième module d'habitacle (3 - 9) depuis la première position fonctionnelle actuelle dans la deuxième position fonctionnelle ajustée en fonction de la vérification du critère d'ajustement,
**caractérisé en ce que** le dispositif de commande (11) évalue un état d'occupation d'un ou de plusieurs sièges de véhicule en tant que critère d'ajustement,
dans lequel le dispositif de commande (11), pour vérifier l'état d'occupation d'un ou de plusieurs sièges de véhicule, vérifie si un passager de véhicule se trouve sur un siège de véhicule donné et si dans le même temps encore d'autres sièges de véhicule sont également occupés.
